# EUROPEAN PATENT SPECIFICATION

(11) **EP 4 400 947 B1**
(45) Date of publication and mention of the grant of the patent: **09.07.2025**
(21) Application number: 23218508.2
(22) Date of filing: 20.12.2023
(51) Int. Cl.: G06F 3/01, G02B 27/01, G06V 10/25

(54) **HIGH-ATTENTION FEATURE DETECTION**
ERKENNUNG VON HOCHAUFMERKSAMKEITSMERKMALEN
DÉTECTION DE CARACTÉRISTIQUES D'ATTENTION ÉLEVÉE

(30) Priority: 10.01.2023 SE 2350007
(43) Date of publication of application: 17.07.2024
(73) Proprietor: Tobii AB, 182 17 Danderyd (SE)
(72) Inventor: Gordon, Maria, 18217 Danderyd (SE); Höglund, Anders, 18217 Danderyd (SE); Wannerberg, Erik, 18217 Danderyd (SE)
(74) Representative: Novagraaf Group

(56) References cited:
- KR-A- 20220 060 163
- US-A1- 2018 032 816

## Description

### Field

This disclosure generally relates to the field of eye tracking. In particular, the disclosure relates to methods and systems for mapping a gaze direction of a user of a wearable device to the environment around the user to identify at least one area of interest in the environment.

### Background

In eye tracking applications, it is often desired to perform certain actions in relation to an environment in which a person is present. This may include using an eye tracking system included in a wearable device to follow the gaze of a user of the wearable device and determine how the user is interacting with the environment, for example identify certain areas or objects at which the user is looking.

One known method of eye tracking includes obtaining a scene image, images, or video of the environment from the perspective of a user of a wearable device, capturing a gaze direction of the user at a point in time corresponding to when the scene image was obtained, and correlating the gaze direction to the environment based on a predetermined image or model of the environment. For example, the scene image can be matched to a predetermined image, and the gaze direction can then be determined relative to the predetermined image. This information can then be used to analyse the user's behaviour in the environment, e.g., determine which parts of the predetermined image hold the user's attention. Such a method is described in US Patent No. 11,269,405 B2.

KR 2022 0060163 A discloses detecting an object of interest based on 3D gaze point information and providing user visual perception metadata.

However, such methods require pre-existing information about the environment to function. For example, a predetermined image or model of the environment must be used in order to associate the user's gaze with features of the environment.

### Summary

This disclosure attempts to solve the problems noted above by providing methods and systems for mapping a gaze direction of a user of a wearable device to the environment around the user to identify at least one area of interest (AOI) in the environment. One or more gaze points may be determined based on one or more attention criteria, such as a fixation time or a number of viewing instances. AOIs can then be determined corresponding to the gaze points. No predetermined knowledge of environment is required in order to identify an AOI.

According to an aspect of the disclosure, there is provided a method for identifying at least one area of interest in an environment around a wearable device, wherein the wearable device comprises an eye tracking arrangement and an outward-facing image sensor, the method comprising determining a plurality of gaze points of a user of the wearable device and corresponding timestamps using at least the eye tracking arrangement, selecting at least one gaze point from the plurality of determined gaze points based on one or more attention criteria, receiving at least one scene image from the outward-facing image sensor at a time corresponding to the timestamp of the at least one selected gaze point, and identifying one or more areas of interest (AOls) in the scene image based on the at least one selected gaze point.

Optionally, the one or more attention criteria comprises at least one of a threshold fixation time, a threshold number of instances of the gaze point, and a classification of an object corresponding to the gaze point. Optionally, the method comprises selecting a gaze point from the plurality of determined gaze points if the gaze point is viewed for more than the threshold fixation time, is viewed for more than the threshold number of instances, and/or corresponds to an object having a predetermined classification.

Optionally, identifying one or more AOIs in the scene image comprises determining an image patch around the at least one gaze point. Optionally, determining an image patch comprises at least one of determining an image patch having a fixed size, determining an image patch having a size dependent on a vergence distance associated with the gaze point, determining an image patch using an edge detection algorithm, and determining an image patch using a neural network.

Optionally, the method comprises selecting a plurality of gaze points from the plurality of determined gaze points, identifying a plurality of AOIs in the scene image, and clustering the identified AOls into one or more clusters. Optionally, clustering the identified AOls into one or more clusters comprises using at least one of a matching algorithm, a computer vision feature detection algorithm and a machine-learning clustering algorithm.

Optionally, the method comprises determining a gaze time associated with each identified AOI. Optionally, the gaze time comprises a total time for which the AOI was viewed by the user, and/or a ratio between the total time for which the AOI was viewed by the user and the total time for which the AOI was present in the scene image.

Optionally, determining a gaze point of the user comprises determining at least one of a gaze direction of the user, a position of the user, a vergence distance, and a viewing angle. Optionally, the at least one scene image comprises a video. Optionally, the wearable device comprises a 3D sensor. Optionally, the wearable device comprises a positional device.

According to another aspect of the disclosure, there is provided an eye tracking system for identifying at least one area of interest in an environment around a wearable device, the system comprising a wearable device comprising an eye tracking arrangement and an outward-facing image sensor and at least one processor configured to determine a plurality of gaze points of a user of the wearable device and corresponding timestamps using at least the eye tracking arrangement, select at least one gaze point from the plurality of determined gaze points based on one or more attention criteria, receive at least one scene image from the outward-facing image sensor at a time corresponding to the timestamp of the at least one selected gaze point, and identify one or more areas of interest (AOls) in the scene image based on the at least one selected gaze point.

Optionally, the wearable device comprises a control unit, and the at least one processor comprises a first processor comprised in the control unit and configured to perform the determining step, and a second processor comprised in the control unit and configured to perform the selecting, receiving and identifying steps.

Optionally, the wearable device comprises a control unit, and the at least one processor comprises a first processor comprised in the control unit and configured to perform the determining step, and a second processor remote from the wearable device and configured to perform the selecting, receiving and identifying steps.

According to another aspect of the disclosure, there is provided a computer-readable medium having stored thereon instructions that, when executed by one or more processors cause execution of the method steps.

### Brief Description of the Drawings

Exemplary embodiments of the disclosure shall now be described with reference to the drawings in which:
FIG. 1 is a perspective view of a wearable device having an eye tracking arrangement and an image sensor;
FIG. 2 shows an example scene image captured by an outward-facing image sensor of a wearable device;
FIG. 3 is a flow chart illustrating an example method for identifying at least one area of interest in an environment around a wearable device;
FIG. 4 shows an example scene image including gaze points of a user;
FIG. 5 shows an example scene image including identified areas of interest;
FIG. 6 is a flow chart illustrating an example method for clustering areas of interest;
FIG. 7 is a block diagram of an exemplary computer system capable of being used in at least some portion of the devices or systems of the present disclosure, or implementing at least some portion of the methods of the present disclosure.

Throughout the description and the drawings, like reference numerals refer to like parts.

### Detailed Description

The ensuing description provides exemplary embodiments only, and is not intended to limit the scope, applicability or configuration of the disclosure. Rather, the ensuing description of the exemplary embodiments will provide those skilled in the art with an enabling description for implementing one or more exemplary embodiments. It being understood that various changes may be made in the function and arrangement of elements and may be practiced within the scope of the invention as set forth in the appended claims.

For example, any detail discussed with regard to one embodiment may or may not be present in all contemplated versions of that embodiment. Likewise, any detail discussed with regard to one embodiment may or may not be present in all contemplated versions of other embodiments discussed herein. Finally, the absence of discussion of any detail with regard to embodiment herein shall be an implicit recognition that such detail may or may not be present in any version of any embodiment discussed herein.

Specific details are given in the following description to provide a thorough understanding of the embodiments. However, it will be understood by one of ordinary skill in the art that the embodiments may be practiced without these specific details. For example, circuits, systems, networks, processes, and other elements in the disclosure may be shown as components in block diagram form in order not to obscure the embodiments in unnecessary detail. In other instances, well-known circuits, processes, algorithms, structures, and techniques may be shown without unnecessary detail in order to avoid obscuring the embodiments

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process may be terminated when its operations are completed, but could have additional steps not discussed or included in a figure. Furthermore, not all operations in any particularly described process may occur in all embodiments. A process may correspond to a method, a function, a procedure, a subroutine, a subprogram, etc. When a process corresponds to a function, its termination corresponds to a return of the function to the calling function or the main function.

The term "machine-readable medium" includes, but is not limited to transitory and non-transitory, portable or fixed storage devices, optical storage devices, wireless channels and various other mediums capable of storing, containing or carrying instruction(s) and/or data. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

Furthermore, embodiments of the disclosure may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Wearable devices are devices capable of being worn by a user, typically they take the form of a pair of glasses, helmet, and/or the like. These glasses may incorporate various forms of sensors, displays, and/or electronics. For example a wearable device may contain an image sensor for capturing images or video of a scene around a wearer.

The wearable device may also contain an eye tracking arrangement. For example, Tobii AB of Danderyd, Stockholm, Sweden offers for sale such a wearable device called "Tobii Pro Glasses 3". This device includes an outward-facing image sensor, or scene camera, in combination with an eye tracking arrangement. It is therefore possible to combine images captured by the scene camera with information from the eye tracking arrangement, to determine where in a particular scene a user is looking.

However, a method or system is required for mapping a gaze direction of a user of a wearable device to the environment around the user to identify at least one AOI in the environment without the need for a predetermined image or model of the environment.

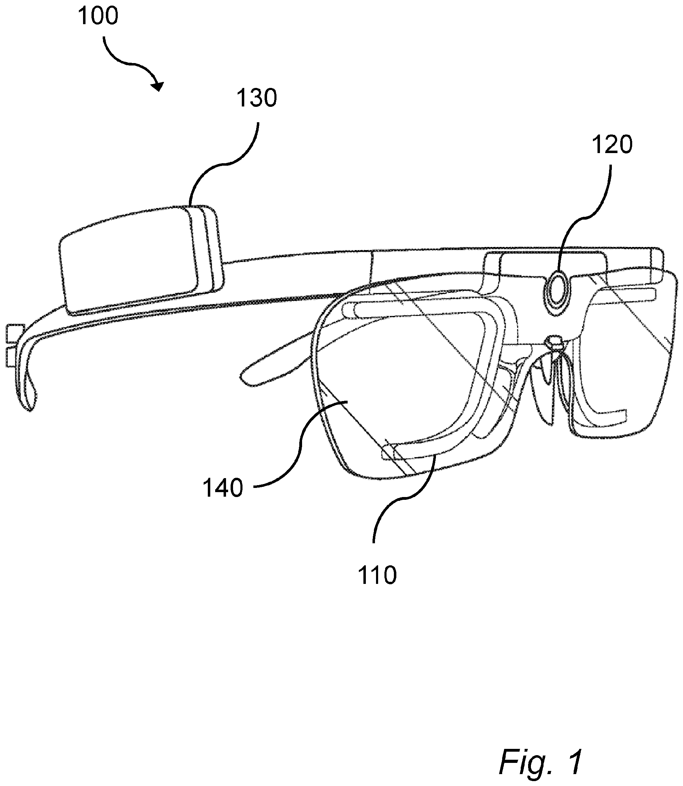

FIG. 1 is a perspective view of a wearable device having an eye tracking arrangement and an image sensor for use in various embodiments of the disclosure. The wearable device 100 is constructed of an eyeglass frame which includes an eye tracking arrangement 110, an image sensor 120, and a control unit 130. In some embodiments, the wearable device 100 may also include a transparent plate 140. The wearable device 100 may be a virtual reality (VR) device such as VR glasses, an augmented reality (AR) device such as AR glasses, or the like.

The eye tracking arrangement 110 and the image sensor 120 may be communicatively connected to the control unit 130, for example via a suitable wired or wireless connection. The eye tracking arrangement 110 and the image sensor 120 may relay information derived therefrom to the control unit 130 for processing and/or wireless or wired communication back to another computing/processing device/system (not shown) located remotely from the wearable device 100, e.g., in a different device. The control unit 130 may send instructions or information to be displayed to the user to a display that may be integrated with the transparent plate 140 in the case of a VR or AR device.

The eye tracking arrangement 110 is configured to capture images of the eye of a user in order to determine a gaze of the user in terms of a gaze vector, a gaze direction and/or a gaze point. To achieve this, the eye tracking arrangement 110 may include one or more image sensors (not shown) and optionally one or more illuminators (not shown). The one or more image sensors are configured to capture images of the eye while the user is wearing the wearable device 100. The one or more illuminators are configured to illuminate an eye of the user. The illuminators may be, for example, infrared or near infrared illuminators, for example in the form of light emitting diodes (LEDs). However, other types of illuminators may also be envisaged. The eye tracking arrangement 110 may relay information to the control unit 130 for processing and/or wireless or wired communication back to a remote processing device. The eye tracking arrangement 110 may be employed for eye tracking for both eyes, or there may be separate arrangements for the left and right eyes. Eye tracking may be performed to estimate a position of a part of an eye and/or a gaze of the user for the left and right eyes separately.

The outward-facing image sensor 120 is configured to capture at least one scene image of the environment around a user of the wearable device 100. A captured scene image may be a still image or video images. The outward-facing image sensor 120 may be, for example, a charge-coupled device (CCD) camera or complementary metal oxide semiconductor (CMOS) camera. The outward-facing image sensor 120 may comprise an integrated circuit containing an array of pixel sensors, each pixel sensor containing a photodetector and an active amplifier. The outward-facing image sensor 120 is capable of converting light into digital signals. As an example, the outward-facing image sensor 120 may be an infrared (IR) image sensor, an RGB sensor, an RGBW sensor, or an RGB or RGBW sensor with an IR filter. Other types of image sensor may also be envisaged.

The control unit 130 may comprise one or more processors. The processor(s) may be application-specific integrated circuits (ASIC) configured to perform a specific eye tracking and position determination method. Alternatively, the processor(s) may be configured to execute instructions (for example in the form of a computer program) stored in one or more memories. Such a memory may be comprised in the wearable device 100, or may be external to (for example located remotely from) the wearable device 100. The control unit 130 may also be configured to provide power for the eye tracking arrangement 110 and the outward-facing image sensor 120.

The transparent plate 140 may enable the user to see beyond the wearable device 100. The transparent plate 140 may be flat or curved. The transparent plate 140 may be made of glass, acrylic, or any other suitable material. The material may be anti-reflective and/or scratch resistant. Separate transparent plates 140 may be employed for the left and right eyes of the user. In some embodiments, the transparent plate 140 may include a display. The display may be a liquid-crystal display (LCD) or an LED display, however other types of displays may also be envisaged. The display may be configured to display a VR or AR display as known in the art. In some embodiments, the transparent plate 140 may include integrated image sensors that form part of the eye tracking arrangement 110.

It is also possible to incorporate a positional device into the wearable device 100. The positional device may be a microelectromechanical system (MEMS), which may include a gyroscope, an accelerometer, and/or the like. Such a system is disclosed in U.S. Patent Application Publication No. 2015/0061995, published Mar. 5, 2015, and entitled "PORTABLE EYE TRACKING DEVICE". It will be appreciated that the wearable device 100 may comprise any suitable form of device which provides positional information. This includes devices external to the wearable device 100. For example, external cameras may be used to capture a location of the wearable device 100, these cameras may use infrared light and/or retroreflective markers may be placed on the wearable device 100. Suitable positional devices will be readily understood by a person of skill in the art.

It is also possible to incorporate a 3D sensor into the wearable device 100. By including a 3D sensor in the wearable device 100, a 3D map of the user's environment may be built as the user is in the environment. A suitable 3D sensor would be readily apparent to a person of skill in the art, however some suitable examples are sensors that use structured light, LIDAR, time of flight sensors, or classic stereo camera imaging with or without active illumination. Through the use of a 3D sensor in real-time, it is possible to enable gaze mapping in non-static environments.

In some embodiments, information from the 3D sensor is combined with information from the positional device. Information from the positional device may provide data relating to the orientation and position of the wearable device 100. By combining this data with information from the 3D sensor it is possible to adjust the 3D information such that it is accurate when the user is in motion.

A possible example of the intended use of the wearable device 100 will now be described. A user enters a supermarket wearing the wearable device 100. The outward-facing image sensor 120 records scene video of the scene in front of the user, and the eye tracking arrangement 110 records the user's gaze relative to that scene. Gaze information is then determined by the control unit 130. This scene video and gaze information is then processed further, either at the control unit 130 or at a remote processing device. This processing involves analysing the incoming scene video and gaze information relative to one or more attention criteria indicating that the user has paid particular attention to a particular part of the scene, for example a particular shelf or product. It can then be determined that a particular part of the scene is an AOI. The analysis may be performed in real time or it may be performed on pre-recorded scene video and gaze information. Information about identified AOls can be stored and/or processed further, as will be described below.

It is also possible to incorporate further sensors into the wearable device 100. For example, a microphone may be included to receive voice commands from a user.

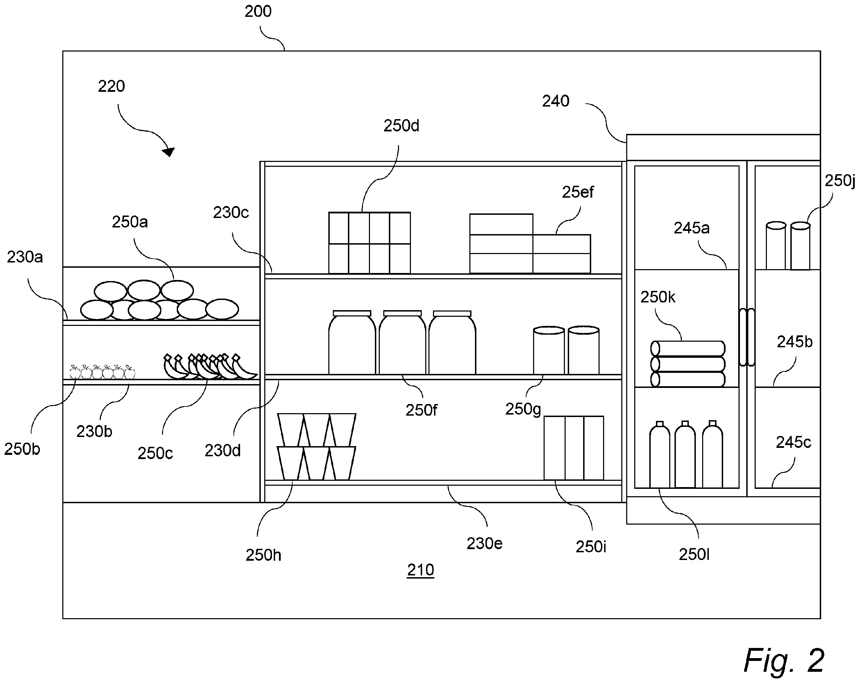

FIG. 2 shows an example scene image 200 captured by an outward-facing image sensor 120 of a wearable device 100 according to the example above. The scene image 200 depicts the environment around the user of the wearable device 100. In the example discussed above, the user is in a supermarket. In this example, the user is in an aisle 210 of the supermarket and is facing a product display area 220. The product display area comprises shelves 230a-e and refrigerator 240, which itself has shelves 245a-c. Each shelf has one or more products 250a-I. The products 250a-I may each have different forms, shapes and sizes, and may be different distances from the user. For example, the refrigerator 240 may be closer to the user than the shelves 230a-e.

The user may look at the shelves and products as they move around the supermarket. As discussed above, the wearable device 100 records scene video and the user's gaze relative to that scene. This can then be analysed to determine if a particular part of the scene is an AOI.

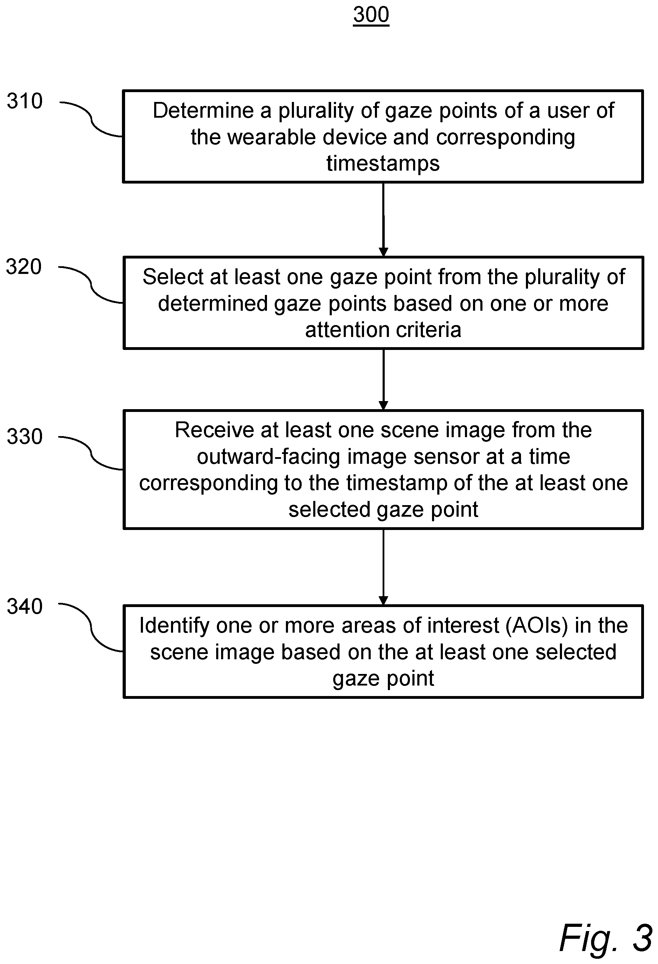

FIG. 3 is a flowchart of a method 300 for identifying at least one area of interest in an environment around a wearable device. The wearable device may be a wearable device 100 as depicted in FIG. 1. The wearable device comprises an eye tracking arrangement 110 and an outward-facing image sensor 120.

At step 310, a plurality of gaze points of a user of the wearable device 100 are determined. As discussed above, this step may be performed by the eye tracking arrangement 110. The gaze points correspond to parts of the environment that the user has looked upon. Each gaze point may correspond to a point in three dimensions. Determination of gaze points may be achieved using any gaze tracking algorithm known in the art, and may comprise determining at least one of a gaze direction of the user, a position of the user, a vergence distance, and a viewing angle. Gaze points may be determined periodically, for example at a frequency between 50Hz and 240 Hz, or in some embodiments up to 1000Hz.

It is often valuable to know from which distance an object was visible and when and where it caught attention. This may be determined based on known vergence distance detection methods. Some examples of the present disclosure may use distance measurement tools to provide the user's distance from an object in an improved manner. For example, as discussed above, a 3D sensor such as a LIDAR sensor, time of flight sensor, or stereo camera imaging, may be included in the wearable device. This can enable a much more reliable determination of vergence distance, and may be combined with simultaneous localization and mapping (SLAM) for even more robust determination. When scene objects are associated to a depth, the 3D position of the object in the environment can be calculated based on the distance between the user and the object. When the user gazes at a known 3D object, the vergence distance signal can be corrected.

The eye tracking arrangement 110 may be employed for eye tracking for both eyes, or there may be separate arrangements for the left and right eyes. Eye tracking may be performed to estimate a position of a part of an eye and/or a gaze of the user for the left and right eyes separately. The gaze points and the timestamps may be determined by a processor comprised in the control unit 130. The control unit 130 may process this information further, or may relay this information to a remote processing device by wireless and/or wired communication. Alternatively, the gaze points and the timestamps may be determined by a processing device remote from the wearable device 100.

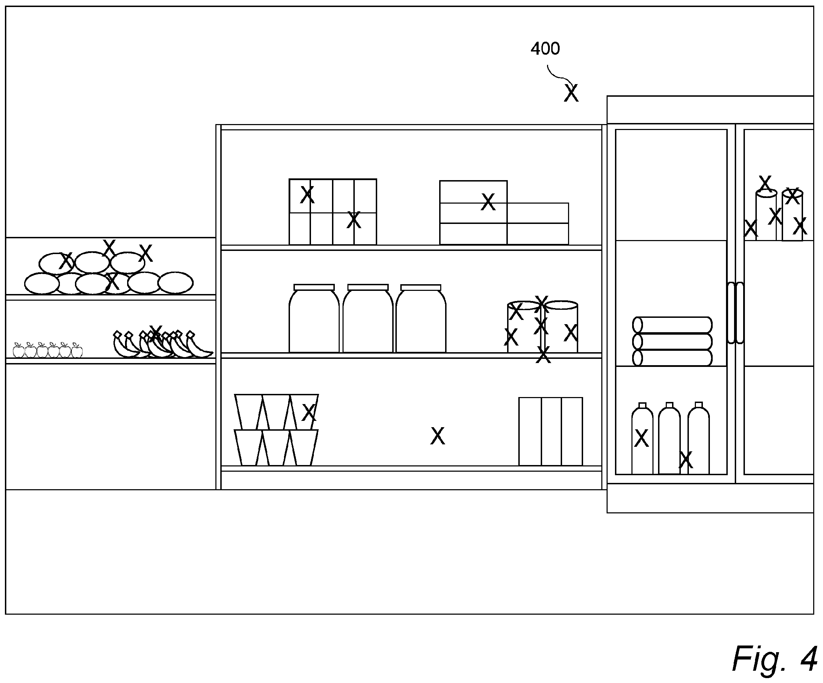

FIG. 4 shows the example scene image 200 of FIG 2, with gaze points 400 overlaid for the purposes of illustration. The gaze points 400 are each marked by an X. In this instance and for the purposes of illustration, the user is in a single position such that the scene image 200 does not change as the gaze points are determined. As can be seen from FIG. 4, the gaze points are spread throughout the scene, with some gaze points clustered around certain products, which indicates the user has paid more attention to those products. The eye tracking arrangement 110 may also record timestamps associated with each gaze point that is determined. In this way, further information about the gaze points can be determined, as will be discussed below.

Whilst FIG. 4 shows an example scene image where the user is in a single position, it will be appreciated that the user may move in the environment, and the same product may be viewed from different angles. In this case, different gaze points in different scene images may correspond to the same product. As such, each gaze point may also be determined in a global reference frame, such that gaze points in different scene images that correspond to the same product may be associated. This may be achieved, for example, using information from a positional device and/or 3D sensor in combination with a gaze vector, a vergence distance, and/or a localization algorithm (for example SLAM), to determine a gaze point in a global reference frame.

Returning to FIG. 3, at step 320, at least one gaze point from the plurality of determined gaze points is selected. The selection is performed based on one or more attention criteria. This enables the determination or identification of different parts of the scene based on how much attention the user has paid to those parts. The gaze points may be selected by a processor comprised in the control unit 130 and/or a processing device remote from the wearable device 100.

One example attention criteria is a threshold fixation time. A fixation is the maintenance of a gaze on a single location for a certain amount of time. An example fixation time that may be used as a threshold fixation time may be 0.5 seconds. This can be determined by measuring how long a gaze in in a particular place. For example, if the user's gaze in fixed at a particular point, or a small area around that point, for a threshold time, it can be determined that the user's gaze is fixated on that point. In the case of periodic gaze point determination, a successive number of gaze points in a particular location may be indicative of a fixation. As such, the timestamps determined at step 310 may be used to determine a fixation. A particular gaze point may be selected from the plurality of gaze points determined at step 310 if the gaze point is viewed for more than the threshold fixation time.

Another example attention criteria is a threshold number of instances of a given gaze point. That is to say, if the user's gaze returns repeatedly to the same point, it can be determined that the user is paying particular attention to that point. An example number of instances that may be used as a threshold fixation time may be 5 instances. A particular gaze point may be selected from the plurality of gaze points determined at step 310 if the gaze point is viewed for more than the threshold number of instances. The threshold number of instances may also be limited to a particular time, for example by determining if the user's gaze returns to the same point a threshold number of times within a given period, for example 5 times within a 10 second period. As such, the timestamps determined at step 310 may be used to determine a number of instances.

Another example attention criteria is a classification of an object corresponding to the gaze point. Taking the example of FIGs. 2 and 4, if it is known that the user is looking for an apple 250b, it can be determined that gaze points corresponding to apples should be selected. This can be done by performing image recognition on the scene image 200 captured by an outward-facing image sensor 120 to identify certain objects, and then correlating gaze points to those objections. A particular gaze point may be selected from the plurality of gaze points determined at step 310 if the gaze point corresponds to an object having a predetermined classification.

The various attention criteria can be used individually or in any combination. For example, all attention criteria may be used in combination. Following the examples above, a particular gaze point may be selected from the plurality of gaze points determined at step 310 if the gaze point is viewed for more than 0.5 seconds and corresponds to an apple.

At step 330, at least one scene image is received from the outward-facing image sensor 120. As discussed above, the outward-facing image sensor 120 may capture a plurality of images (e.g. video) as the user moves around the environment. A particular scene image may therefore be received that was captured at a time corresponding to the timestamp of the at least one selected gaze point. A respective scene image may be received for each selected gaze point. It will therefore be appreciated that, if a plurality of gaze points are selected at step 320, a plurality of corresponding images will be received at step 330. The at least one scene image may be received by a processor comprised in the control unit 130 and/or a processing device remote from the wearable device 100.

At step 340, an AOI in a scene image is identified based on the corresponding selected gaze point. That is to say, an AOI can be determined around the gaze point to indicate where the user is paying attention. A number of different AOIs may be determined as the user moves around the environment. The AOIs may be identified by a processor comprised in the control unit 130 and/or a processing device remote from the wearable device 100.

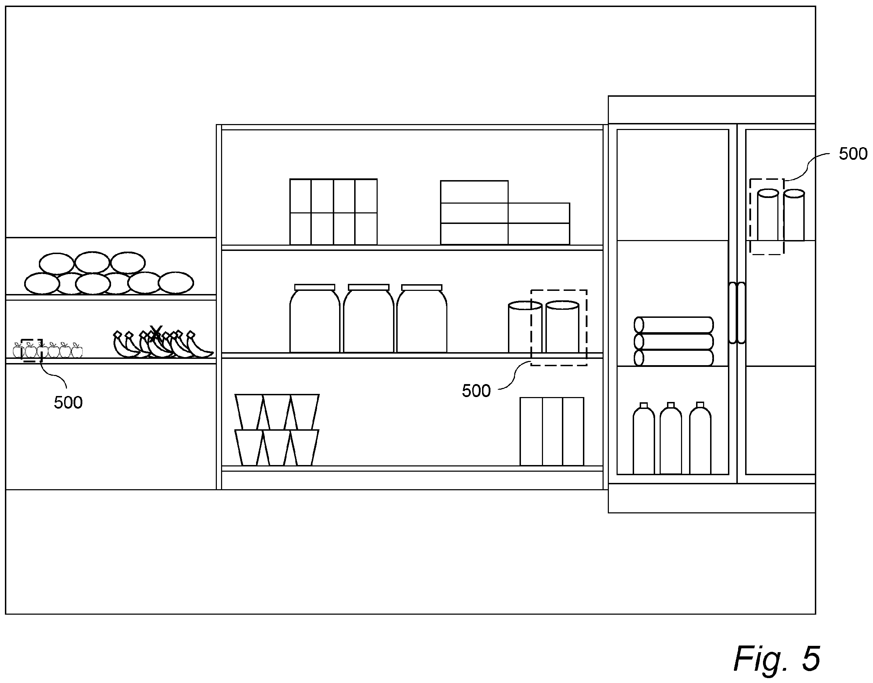

FIG. 5 shows the example scene image 200 of FIG 2, with AOIs 500 determined corresponding to a number of the gaze points 400 shown in FIG. 4. The AOIs 500 are each shown by a rectangular image patch with a dotted line. An image patch can be determined in a number of ways, as will be discussed below.

In one example, an image patch may have a fixed size. For example, for a given gaze point, an image patch may be determined that has fixed dimensions around the gaze point. The dimension could be determined based on an expected size of the AOI. For example, in the context of a supermarket, an average product size may be used to determine the dimension. The image patch may have any suitable shape, such as a circle having a fixed radius, a square having a fixed width, a rectangle having a fixed length and/or width, or the like.

In another example, an image patch may have a size dependent on a vergence distance associated with the gaze point. For example, the size of the image patch may be inversely proportional to the vergence distance. That is to say, if a gaze point is relatively far from the user, the AOI will likely be smaller as it is further away. By the same token, AOIs closer to the user may be larger.

In another example, an image patch may be determined using an edge detection algorithm. For example, if it is determined that a selected gaze point is within the bounds of a particular product, an edge detection algorithm can determine the edges of the product from the scene image and define the AOI accordingly. Any suitable edge detection algorithm known in the art may be used, for example a Canny edge detection algorithm.

In another example, an image patch may be determined using a neural network. For example, a neural network may be trained to perform classification of parts of an image (e.g. product, person, background). In some examples, the size of the image patch could be determined based on the classification. For example, the image patch for an apple may be smaller than the image patch for a case of drinks.

The various image patch determination can be used individually or in any combination. For example, a plurality of AOls may be determined as the user moves around the environment, and their respective image patches may be determined individually in any suitable manner. In some embodiments, an edge detection algorithm could be selected based on a classification of part of an image. In some examples, an analyst may filter the identified AOls for which image patches are determined and decide which image patch determination method is most appropriate.

The above method may be used to analyze human behavior in an environment without predetermined knowledge of environment. This means that an analyst does not need to indicate scenes or objects beforehand, as is done in current approaches such as assistive mapping. Instead, the analyst will be presented with suggestions of objects based on the AOls identified in the method 300.

An identified AOI may be used in multiple manners. For example, it is possible to note the occurrence of an AOI in any video/series of images provided by the outward facing image sensor 120. It is therefore possible to analyze a video captured by the outward facing image sensor 120, map gaze information to the video, and then output certain metrics, for example number of gaze points in a scene, gaze point positions in the scene or in a global reference frame, the user's gaze pattern, the order in which objects in the scene were viewed, gaze times/durations, and the like. For example, a gaze time associated with each identified AOI may be determined. The gaze time may comprise a total time for which the AOI was viewed by the user. Alternative, the gaze time may comprise a ratio between the total time for which the AOI was viewed by the user and the total time for which the AOI was present in the scene image. For example, in the case that the user moves around the environment and views a particular product for the entire time it is visible, the ratio may provide a better indication of attention than the total time for which the AOI was viewed, which may be relatively short compared to other AOls. The ratio may be expressed as a percentage.

In examples where the wearable device comprises a positional device and/or a 3D sensor, data relating to the orientation and position of the wearable device 100 can be used to map the environment around a user. It is possible therefore to build a 3D map of the environment around the user, the path the user has traveled in that environment and the attributes of the user's travel in that environment. The attributes could include location, gaze direction, speed of travel, direction of travel, vertical distance from the floor, etc. in the example of a supermarket, mapping a user's path would ordinarily require a floor map of the store must be known and then data must be gathered regarding user's within the store.

Data describing the distance between an AOI and the user can be used to provide further information. For example, the user's position relative to the AOI can be combined with the total time for which the AOI was viewed by the user and/or the total time for which the AOI was present in the scene image. The ratio between the total time for which the AOI was viewed by the user and the total time for which the AOI was present in the scene image may be split based on the user's distance to the AOI. Other parameters, such as the user's average distance to the AOI, or distance to AOI at the first gaze fixation, can also be determined.

Further by using the motion information from a wearable device according to certain embodiments, it is possible to determine when a user is approaching AOI. This can be achieved using the motion information of the user. It can also be achieved by finding the AOI in the image and computing its relative size in the video image, as the AOI will occupy a larger and larger space in the scene video as the user approaches it.

This also allows the creation of heat maps representing a user's path or areas of activity in an environment, provided both position and angle information are related to a user's gaze. A heat map is a visual representation of an environment with highlighted regions showing areas which received the most attention from users. This visual representation may be adjusted based on viewing angle or any other attribute of a user. For example, multiple user's gaze information and attributes within the environment (as previously described) may be combined to provide a visual representation showing which areas in the environment received the most attention. This highlighting may take the form of a traditional heat map where, for example, a color akin to red, orange and the like show areas of heavy attention whereas colors akin to blue, green and the like show areas of low attention. However, any form of visual representation may be used such as shapes, logos, images, etc. Therefore, during playback of the video, it will be easier for a human to see the AOI. It is also possible to overlay computed heat-maps in the live-video.

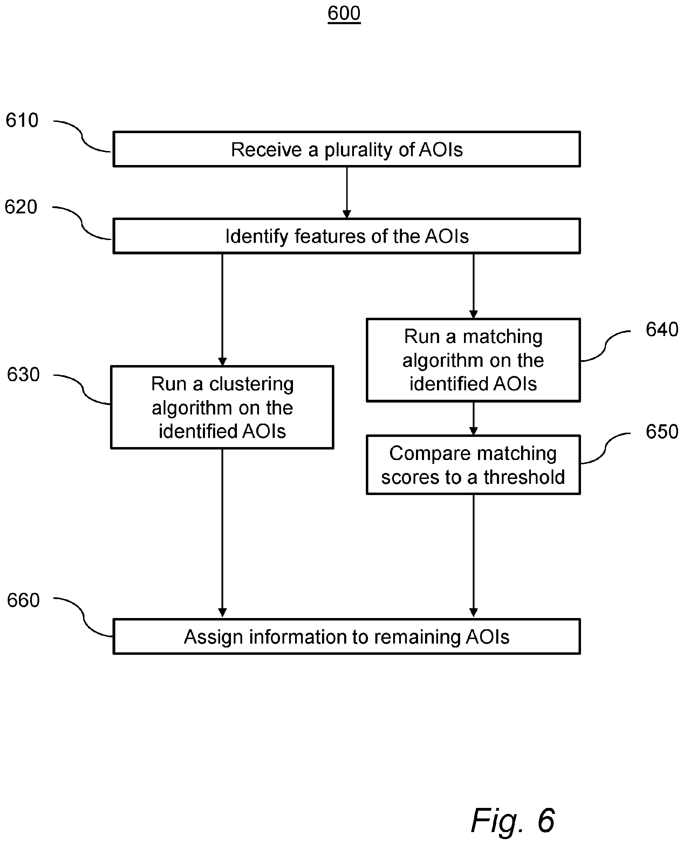

In some examples, AOIs may be clustered into one or more clusters or groups. For example, where a plurality of AOIs is identified, subsets of the AOIs may be grouped together based on a particular criteria. For example, if a certain product is present in two different parts of the environment, then an AOI may be identified for that product at two different parts of the scene video. These AOIs could then be grouped together as they correspond to the same product. The clustering may be performed by a processor comprised in the control unit 130 and/or a processing device remote from the wearable device 100. FIG. 6 shows an example method 600 for clustering AOls.

At step 610, a plurality of AOIs is received. These may be the AOIs that are identified in step 340 of the method 300.

At step 620, the AOls can be processed to identify certain features. For example, features of the AOIs such as intensity, color, discontinuities in pixel values, edges, or corners may be identified. This can be achieved using an image processing algorithm, such as a pre-trained convolutional neural network, or can be done manually by an analyst. Step 620 may be performed as part of step 630 or 640 described below, depending on the techniques used in those steps.

At step 630, the processed AOIs are clustered using a clustering algorithm. Suitable clustering algorithms include machine learning clustering techniques, such as a K-means algorithm or a deep learning clustering technique, a Gaussian Mixture Model, or a combination of techniques. Alternatively or additionally, an analyst may cluster the AOls manually, either one at a time or multiple AOIs at once. In some embodiments, the result of manual clustering by an analyst could be used to train the clustering algorithm. For example, if first and second AOIs are determined to be in a single cluster by a machine learning clustering technique, but the first AOI is subsequently not considered to be part of that cluster by an analyst, the machine learning clustering algorithm can be retrained (e.g. parameter thresholds of an algorithm can be tuned based on the manual result or a constraint may be applied). The clustering algorithm may then be trained to cluster similar AOls into separate clusters.

Alternatively or additionally, at step 640, a matching algorithm is run on the AOIs. This may be an image matching algorithm that determines the similarity of two AOls based on a particular feature, such as color, intensity, edges, and corners. Some examples of suitable matching algorithms include SIFT, SURF and ORB. The AOIs may then be assigned a matching score relative to other AOIs that have been identified. With a localization algorithm (for example SLAM), an AOI can also be given an associated world position. Using the world position as part of matching process will make the matching more robust.

At step 650, the matching scores are compared to a threshold in order to identify AOls that have a sufficient level of matching. This helps to reduce the total number of AOIs that are produced. For example, AOIs that do not match any other AOI in a sufficient manner can be removed. Other thresholds may also be used to reduce the number of AOls, such as removing AOls that have been gazed for less than a certain amount of a scene video.

Optionally, at step 660, further information may be assigned to each AOI in a given cluster. For example, a timestamp may be assigned that indicates when in a scene video the particular items in a cluster were viewed. Similarly, a gaze time may be assigned that indicates a total time for which the AOI was viewed by the user. Similarly, a position in a global reference frame may be assigned that indicates where in an environment particular items are located.

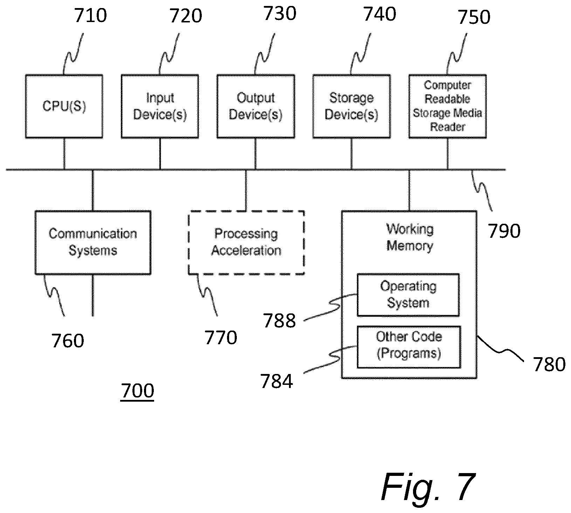

FIG. 7 is a block diagram illustrating an exemplary computer system 700 in which embodiments of the present disclosure may be implemented. This example illustrates a computer system 700 such as may be used, in whole, in part, or with various modifications, to provide the functions of the disclosed methods and systems. For example, various functions may be controlled by the computer system 700, including, merely by way of example, generating, processing, comparing, determining, receiving, etc.

The computer system 700 is shown comprising hardware elements that may be electrically coupled via a bus 790. The hardware elements may include one or more central processing units 710, one or more input devices 720 (e.g., a mouse, a keyboard, etc.), and one or more output devices 730 (e.g., a display device, a printer, etc.). The computer system 700 may also include one or more storage devices 740. By way of example, the storage devices 740 may be disk drives, optical storage devices, solid-state storage device such as a random-access memory ("RAM") and/or a read-only memory ("ROM"), which can be programmable, flash-updateable and/or the like.

The computer system 700 may additionally include a computer-readable storage media reader 750, a communications system 760 (e.g., a modem, a network card (wireless or wired), an infrared communication device, Bluetooth^{™} device, cellular communication device, etc.), and a working memory 780, which may include RAM and ROM devices as described above. In some embodiments, the computer system 700 may also include a processing acceleration unit 770, which can include a digital signal processor, a special-purpose processor and/or the like.

The computer-readable storage media reader 750 can further be connected to a computer-readable storage medium, together (and, optionally, in combination with the storage devices 740) comprehensively representing remote, local, fixed, and/or removable storage devices plus storage media for temporarily and/or more permanently containing computer-readable information. The communications system 760 may permit data to be exchanged with a network, system, computer and/or other component described above.

The computer system 700 may also comprise software elements, shown as being currently located within the working memory 780, including an operating system 788 and/or other code 784. It should be appreciated that alternative embodiments of a computer system 700 may have numerous variations from that described above. For example, customised hardware might also be used and/or particular elements might be implemented in hardware, software (including portable software, such as applets), or both. Furthermore, connection to other computing devices such as network input/output and data acquisition devices may also occur.

Software of the computer system 700 may include code 784 for implementing any or all of the function of the various elements of the architecture as described herein. For example, software, stored on and/or executed by a computer system such as the system 700, can provide the functions of the disclosed system. Methods implementable by software on some of these components have been discussed above in more detail.

The invention has now been described in detail for the purposes of clarity and understanding. However, it will be appreciated that certain changes and modifications may be practiced within the scope of the appended claims.

## Claims

1. A method (300) for identifying at least one area of interest in an environment around a wearable device (100), wherein the wearable device comprises an eye tracking arrangement (110) and an outward-facing image sensor (120), the method comprising:
determining (310) a plurality of gaze points (400) of a user of the wearable device and corresponding timestamps using at least the eye tracking arrangement;
selecting (320) a plurality of gaze points (400) from the plurality of determined gaze points based on one or more attention criteria;
receiving (330) at least one scene image (200) from the outward-facing image sensor at a time corresponding to the timestamp of the at least one selected gaze point; and
identifying (340) a plurality of areas of interest "AOls" (500) in the scene image based on the at least one selected gaze point; **characterized by**
clustering the identified AOIs (500) into one or more clusters.

2. The method (300) of claim 1, wherein the one or more attention criteria comprises at least one of a threshold fixation time, a threshold number of instances of the gaze point (400), and a classification of an object (250) corresponding to the gaze point.

3. The method (300) of claim 2, comprising selecting a gaze point (400) from the plurality of determined gaze points if the gaze point is viewed for more than the threshold fixation time, is viewed for more than the threshold number of instances, and/or corresponds to an object (250) having a predetermined classification.

4. The method (300) of any preceding claim, wherein identifying one or more AOIs (500) in the scene image (200) comprises determining an image patch around the at least one gaze point (400).

5. The method (300) of claim 4, wherein determining an image patch comprises at least one of:
determining an image patch having a fixed size;
determining an image patch having a size dependent on a vergence distance associated with the gaze point (400);
determining an image patch using an edge detection algorithm; and
determining an image patch using a neural network.

6. The method (300) of claim 1, wherein clustering the identified AOls (500) into one or more clusters comprises using at least one of a matching algorithm, a computer vision feature detection algorithm and a machine-learning clustering algorithm.

7. The method of any preceding claim, comprising determining a gaze time associated with each identified AOI (500).

8. The method (300) of claim 7, wherein the gaze time comprises:
a total time for which the AOI (500) was viewed by the user; and/or
a ratio between the total time for which the AOI was viewed by the user and the total time for which the AOI was present in the scene image.

9. The method of any preceding claim, wherein determining a gaze point (400) of the user comprises determining at least one of a gaze direction of the user, a position of the user, a vergence distance, and a viewing angle.

10. The method (300) of any preceding claim, wherein the at least one scene image (200) comprises a video and/or wherein the wearable device (100) comprises a 3D sensor and/or a positional device.

11. An eye tracking system for identifying at least one area of interest in an environment around a wearable device (100), the system comprising:
a wearable device comprising an eye tracking arrangement (110) and an outward-facing image sensor (120); and
at least one processor configured to:
determine a plurality of gaze points (400) of a user of the wearable device and corresponding timestamps using at least the eye tracking arrangement;
select a plurality of gaze points (400) from the plurality of determined gaze points based on one or more attention criteria;
receive at least one scene image (200) from the outward-facing image sensor at a time corresponding to the timestamp of the at least one selected gaze point; and
identify a plurality of areas of interest "AOls" (500) in the scene image based on the at least one selected gaze point; **characterized by**
clustering the identified AOIs (500) into one or more clusters.

12. The eye tracking system of claim 11, wherein the wearable device (100) comprises a control unit (130), and the at least one processor comprises:
a first processor comprised in the control unit and configured to perform the determining step; and
a second processor comprised in the control unit and configured to perform the selecting, receiving and identifying steps.

13. The eye tracking system of claim 11, wherein the wearable device (100) comprises a control unit (130), and the at least one processor comprises:
a first processor comprised in the control unit and configured to perform the determining step; and
a second processor remote from the wearable device and configured to perform the selecting, receiving and identifying steps.

14. The eye tracking system according to anyone of claims 11-13, wherein the second processor is configured to cluster the identified AOls into a plurality of clusters using at least one of a matching algorithm, a computer vision feature detection algorithm and a machine-learning clustering algorithm.

15. A computer-readable medium having stored thereon instructions that, when executed by one or more processors cause execution of the method steps according to any of claims 1 to 10.

## Patentansprüche

1. Verfahren (300) zum Identifizieren mindestens eines Bereichs von Interesse in einer Umgebung um eine tragbare Vorrichtung (100), wobei die tragbare Vorrichtung eine Augenverfolgungsanordnung (110) und einen nach außen gerichteten Bildsensor (120) umfasst, das Verfahren umfassend:
Bestimmen (310) einer Vielzahl von Blickpunkten (400) eines Benutzers der tragbaren Vorrichtung und der entsprechenden Zeitstempel unter Verwendung mindestens der Augenverfolgungsanordnung;
Auswählen (320) einer Vielzahl von Blickpunkten (400) aus der Vielzahl von bestimmten Blickpunkten basierend auf einem oder mehreren Aufmerksamkeitskriterien;
Empfangen (330) mindestens eines Szenenbilds (200) vom dem nach außen gerichteten Bildsensor zu einem Zeitpunkt, der dem Zeitstempel des mindestens einen ausgewählten Blickpunkts entspricht; und
Identifizieren (340) einer Vielzahl von Bereichen von Interesse "AOIs" (500) in dem Szenenbild basierend auf dem mindestens einen ausgewählten Blickpunkt; **gekennzeichnet durch**
Clustern der identifizierten AOls (500) in einen oder mehrere Cluster.

2. Verfahren (300) nach Anspruch 1, wobei das eine oder die mehreren Aufmerksamkeitskriterien mindestens eines von einer Schwellenwertfixierungszeit, einer Schwellenwertanzahl von Instanzen des Blickpunkts (400) und einer Klassifizierung eines Objekts (250), das dem Blickpunkt entspricht, umfasst.

3. Verfahren (300) nach Anspruch 2, umfassend das Auswählen eines Blickpunkts (400) aus der Vielzahl von bestimmten Blickpunkten, falls der Blickpunkt länger als die Schwellenwertfixierungszeit betrachtet wird, für mehr als die Schwellenwertanzahl von Instanzen betrachtet wird und/oder einem Objekt (250) entspricht, das eine zuvor bestimmte Klassifizierung aufweist.

4. Verfahren (300) nach einem der vorstehenden Ansprüche, wobei das Identifizieren eines oder mehrerer AOls (500) in dem Szenenbild (200) das Bestimmen einer Bildstelle um den mindestens einen Blickpunkt (400) umfasst.

5. Verfahren (300) nach Anspruch 4, wobei das Bestimmen einer Bildstelle mindestens eines der umfasst von:
Bestimmen einer Bildstelle, die eine feste Größe aufweist;
Bestimmen einer Bildstelle, die eine Größe aufweist, die von einer Konvergenzdistanz abhängt, die mit dem Blickpunkt (400) verknüpft ist;
Bestimmen einer Bildstelle unter Verwendung eines Kantenerkennungsalgorithmus; und
Bestimmen einer Bildstelle unter Verwendung eines neuronalen Netzwerks.

6. Verfahren (300) nach Anspruch 1, wobei das Clustern der identifizierten AOls (500) in einen oder mehrere Cluster ein Verwenden mindestens eines Matching-Algorithmus, eines Algorithmus einer Merkmalserkennung für Computervision und eines Cluster-Algorithmus für maschinelles Lernen umfasst.

7. Verfahren nach einem der vorstehenden Ansprüche, umfassend das Bestimmen einer Blickdauer, die mit jedem identifizierten AOI (500) verknüpft ist.

8. Verfahren (300) nach Anspruch 7, wobei die Blickzeit umfasst:
die Gesamtzeit, während der die AOI (500) durch den Benutzer betrachtet wurde; und/oder
ein Verhältnis zwischen der Gesamtzeit, während der der AOI durch den Benutzer betrachtet wurde, und der Gesamtzeit, während der der AOI in dem Szenenbild vorhanden war.

9. Verfahren nach einem der vorstehenden Ansprüche, wobei das Bestimmen eines Blickpunkts (400) des Benutzers das Bestimmen von mindestens einer Blickrichtung des Benutzers, einer Position des Benutzers, einer Konvergenzdistanz und eines Betrachtungswinkels umfasst.

10. Verfahren (300) nach einem der vorstehenden Ansprüche, wobei das mindestens eine Szenenbild (200) ein Video umfasst und/oder wobei die tragbare Vorrichtung (100) einen 3D-Sensor und/oder eine Positionsvorrichtung umfasst.

11. Augenverfolgungssystem zum Identifizieren mindestens eines Bereichs von Interesse in einer Umgebung um eine tragbare Vorrichtung (100), das System umfassend:
eine tragbares Vorrichtung, umfassend eine Augenverfolgungsanordnung (110) und einen nach außen gerichteten Bildsensor (120); und
mindestens einen Prozessor, der konfiguriert ist zum:
Bestimmen einer Vielzahl von Blickpunkten (400) eines Benutzers der tragbaren Vorrichtung und der entsprechenden Zeitstempel unter Verwendung mindestens der Augenverfolgungsanordnung;
Auswählen einer Vielzahl von Blickpunkten (400) aus der Vielzahl von bestimmten Blickpunkten basierend auf einem oder mehreren Aufmerksamkeitskriterien;
Empfangen von mindestens einem Szenenbild (200) von dem nach außen gerichteten Bildsensor zu einem Zeitpunkt, der dem Zeitstempel des mindestens einen ausgewählten Blickpunkts entspricht; und
Identifizieren einer Vielzahl von Bereichen von Interesse "AOIs" (500) in dem Szenenbild basierend auf dem mindestens einen ausgewählten Blickpunkt; **gekennzeichnet durch**
Clustern der identifizierten AOls (500) in einen oder mehrere Cluster.

12. Augenverfolgungssystem nach Anspruch 11, wobei die tragbare Vorrichtung (100) eine Steuereinheit (130) umfasst und der mindestens eine Prozessor umfasst:
einen ersten Prozessor, der in der Steuereinheit enthalten und konfiguriert ist, um den Bestimmungsschritt durchzuführen; und
einen zweiten Prozessor, der in der Steuereinheit enthalten und konfiguriert ist, um die Auswahl-, Empfangs- und Identifizierungsschritte durchzuführen.

13. Augenverfolgungssystem nach Anspruch 11, wobei die tragbare Vorrichtung (100) eine Steuereinheit (130) umfasst und der mindestens eine Prozessor umfasst:
einen ersten Prozessor, der in der Steuereinheit enthalten und konfiguriert ist, um den Bestimmungsschritt durchzuführen; und
einen zweiten Prozessor, der von der tragbaren Vorrichtung entfernt und konfiguriert ist, um die Auswahl-, Empfangs- und Identifizierungsschritte durchzuführen.

14. Augenverfolgungssystem nach einem der Ansprüche 11 bis 13, wobei der zweite Prozessor konfiguriert ist, um die identifizierten AOls unter Verwendung von mindestens einem Matching-Algorithmus, einem Algorithmus der Merkmalserkennung für Computervision und einem Cluster-Algorithmus für maschinelles Lernen in eine Vielzahl von Clustern zu clustern.

15. Computerlesbares Medium, das Anweisungen darauf gespeichert aufweist, die, wenn sie durch einen oder mehrere Prozessoren ausgeführt werden, eine Ausführung der Verfahrensschritte nach einem der Ansprüche 1 bis 10 veranlassen.

## Revendications

1. Procédé (300) permettant d'identifier au moins une zone d'intérêt dans un environnement autour d'un dispositif portable (100), dans lequel le dispositif portable comprend un dispositif de suivi des yeux (110) et un capteur d'image orienté vers l'extérieur (120), le procédé comprenant :
la détermination (310) d'une pluralité de points de regard (400) d'un utilisateur du dispositif portable et d'estampilles temporelles correspondantes à l'aide d'au moins le dispositif de suivi des yeux ;
la sélection (320) d'une pluralité de points de regard (400) parmi la pluralité de points de regard déterminés, sur la base d'un ou de plusieurs critères d'attention ;
la réception (330) d'au moins une image de scène (200) à partir du capteur d'image orienté vers l'extérieur à un moment correspondant à l'estampille temporelle de l'au moins un point de regard sélectionné ; et
l'identification (340) d'une pluralité de zones d'intérêt « AOI » (500) dans l'image de scène sur la base de l'au moins un point de regard sélectionné ; **caractérisé par**
le regroupement des AOI (500) identifiées en un ou plusieurs groupes.

2. Procédé (300) selon la revendication 1, dans lequel le ou les critères d'attention comprennent au moins l'un parmi un temps seuil de fixation, un nombre seuil d'instances du point de regard (400) et une classification d'un objet (250) correspondant au point de regard.

3. Procédé (300) selon la revendication 2, comprenant la sélection d'un point de regard (400) parmi la pluralité de points de regard déterminés si le point de regard est visualisé plus longtemps que le temps seuil de fixation, est visualisé plus souvent que le nombre seuil d'instances, et/ou correspond à un objet (250) ayant une classification prédéterminée.

4. Procédé (300) selon l'une quelconque revendication précédente, dans lequel l'identification d'un ou plusieurs AOI (500) dans l'image de scène (200) comprend la détermination d'un carreau d'image autour de l'au moins un point de regard (400).

5. Procédé (300) selon la revendication 4, dans lequel la détermination d'un carreau d'image comprend au moins l'une parmi :
la détermination d'un carreau d'image ayant une taille fixe ;
la détermination d'un carreau d'image ayant une taille qui dépend d'une distance de vergence associée au point de regard (400) ;
la détermination d'un carreau d'image à l'aide d'un algorithme de détection de contours ; et
la détermination d'un carreau d'image à l'aide d'un réseau neuronal.

6. Procédé (300) selon la revendication 1, dans lequel le regroupement des AOI (500) identifiées en un ou plusieurs groupes comprend l'utilisation d'au moins l'un parmi un algorithme d'appariement, un algorithme de détection de caractéristiques de vision par ordinateur et un algorithme de regroupement par apprentissage automatique.

7. Procédé selon l'une quelconque revendication précédente, comprenant la détermination d'un temps de regard associé à chaque AOI identifiée (500).

8. Procédé (300) selon la revendication 7, dans lequel le temps de regard comprend :
un temps total pendant lequel l'AOI (500) a été visualisée par l'utilisateur ; et/ou
un rapport entre le temps total pendant lequel l'AOI a été visualisée par l'utilisateur et le temps total pendant lequel l'AOI était présente dans l'image de scène.

9. Procédé selon l'une quelconque revendication précédente, dans lequel la détermination d'un point de regard (400) de l'utilisateur comprend la détermination d'au moins l'un parmi une direction du regard de l'utilisateur, une position de l'utilisateur, une distance de vergence et un angle de vue.

10. Procédé (300) selon l'une quelconque revendication précédente, dans lequel l'au moins une image de scène (200) comprend une vidéo et/ou dans lequel le dispositif portable (100) comprend un capteur 3D et/ou un dispositif de positionnement.

11. Système de suivi des yeux permettant d'identifier au moins une zone d'intérêt dans un environnement autour d'un dispositif portable (100), le système comprenant :
un dispositif portable comprenant un dispositif de suivi des yeux (110) et un capteur d'image orienté vers l'extérieur (120) ; et
au moins un processeur configuré pour :
déterminer une pluralité de points de regard (400) d'un utilisateur du dispositif portable et d'estampilles temporelles correspondantes à l'aide d'au moins le dispositif de suivi des yeux ;
sélectionner une pluralité de points de regard (400) parmi la pluralité de points de regard déterminés, sur la base d'un ou plusieurs critères d'attention ;
recevoir au moins une image de scène (200) à partir du capteur d'image orienté vers l'extérieur à un moment correspondant à l'estampille temporelle de l'au moins un point de regard sélectionné ; et
identifier une pluralité de zones d'intérêt « AOI » (500) dans l'image de scène sur la base de l'au moins un point de regard sélectionné ; **caractérisé par**
le regroupement des AOI (500) identifiées en un ou plusieurs groupes.

12. Système de suivi des yeux selon la revendication 11, dans lequel le dispositif portable (100) comprend une unité de commande (130), et l'au moins un processeur comprend :
un premier processeur compris dans l'unité de commande et configuré pour effectuer l'étape de détermination ; et
un second processeur compris dans l'unité de commande et configuré pour effectuer les étapes de sélection, de réception et d'identification.

13. Système de suivi des yeux selon la revendication 11, dans lequel le dispositif portable (100) comprend une unité de commande (130), et l'au moins un processeur comprend :
un premier processeur compris dans l'unité de commande et configuré pour effectuer l'étape de détermination ; et
un second processeur distant du dispositif portable et configuré pour effectuer les étapes de sélection, de réception et d'identification.

14. Système de suivi des yeux selon l'une quelconque des revendications 11 à 13, dans lequel le second processeur est configuré pour regrouper les AOI identifiées en une pluralité de groupes à l'aide d'au moins l'un parmi un algorithme d'appariement, un algorithme de détection des caractéristiques de vision par ordinateur, et un algorithme de regroupement par apprentissage automatique.

15. Support lisible par ordinateur sur lequel sont stockées des instructions qui, lorsqu'elles sont exécutées par un ou plusieurs processeurs, entraînent l'exécution des étapes de procédé selon l'une quelconque des revendications 1 à 10.
